Europäisches Patentamt

European Patent Office

Office européen des brevets

(11) Publication number: **0 271 978 B1**

# EUROPEAN PATENT SPECIFICATION

(45) Date of publication of patent specification: **17.06.92**   (51) Int. Cl.⁵: **G11B 23/087**, G11B 15/60

(21) Application number: **87308949.4**

(22) Date of filing: **09.10.87**

(54) **Composite tape guide for a VTR tape cassette.**

(30) Priority: **15.12.86 JP 298367/86**
**15.12.86 JP 192546/86**
**15.12.86 JP 192545/86**

(43) Date of publication of application:
**22.06.88 Bulletin 88/25**

(45) Publication of the grant of the patent:
**17.06.92 Bulletin 92/25**

(84) Designated Contracting States:
**CH DE FR GB IT LI NL**

(56) References cited:
**EP-A- 0 187 319        EP-A- 0 217 157**
**DE-A- 2 808 998        DE-A- 2 840 069**
**GB-A- 2 143 208        US-A- 3 889 900**
**US-A- 4 168 043        US-A- 4 191 345**

(73) Proprietor: **SANWA NEEDLE BEARING CO., LTD.**
**No. 5-30-4, Aoto Katsushika-ku Tokyo(JP)**

(72) Inventor: **Tanaka, Masamitsu**
**Sanwa Needle Bearing Co., Ltd. No. 5-30-4, Aoto**
**Katsushika-ku Tokyo(JP)**

(74) Representative: **Jukes, Herbert Lewis Swann, Elt & Company 31 Beaumont Street Oxford OX1 2NP(GB)**

## Description

This invention relates to a tape guide, e.g. for a tape cassette for VTR.

European patent application specification EP-A-0187319 and the american patent specification US-A-4191345 disclose a tape guide comprising a cylindrical body of a first material covered with a sheet member made of steel, the surface covered by the sheet member being sufficient to ensure that the tape only contacts the sheet member. A special embodiment in EP-A-0187319 mentions the use of a plastics material for the sheet member, this material being non-magnetic.

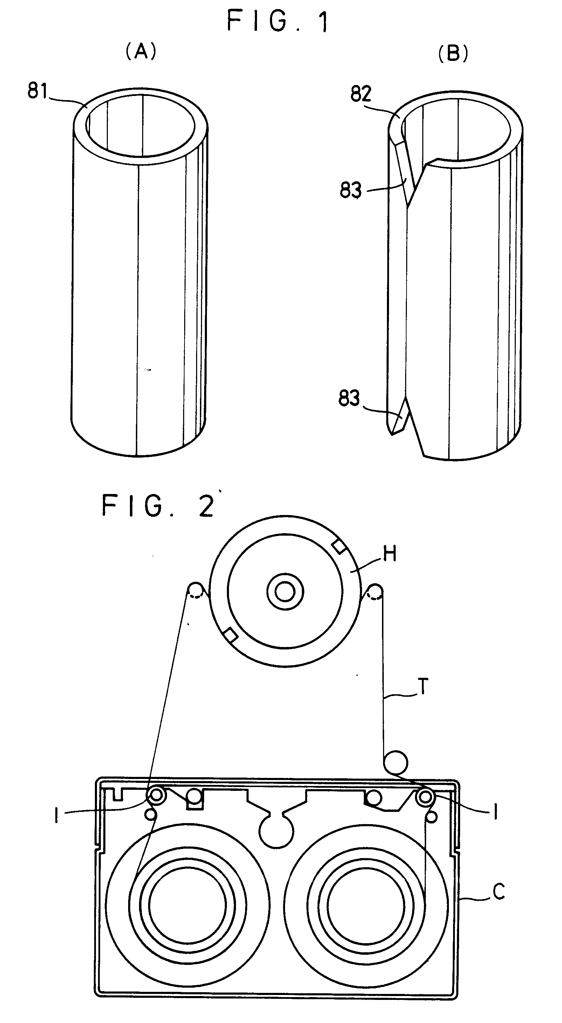

A known tape guide 81 is shown in Fig. 1(a) of the accompanying drawings. Guide 81 is a stainless steel tube cut to predetermined size. Guide 81 has inner and outer diameters to be releasably mounted to a cassette case C (Fig. 2). Another known tape guide 82 is shown in Fig. 1(B). Guide 82 is a cylindrically rolled stainless steel plate. Guide 82 has four steeply bevelled corner portions providing four locating recesses 83 for preventing rotation of the guide when the guide is mounted to cassette case C.

Reduction of cost of VTR products (e.g. a tape guide) is required. Production costs of guides 81, 82 may be reduced: by improving a readily mouldable process, or by automatic operation to reduce labour costs. Manufacture of guides 81, 82 has already been almost automated; thus, improvement in processing would not provide a sharp reduction in cost. Current manufacture is on a large scale (e.g. hundreds of thousands or millions), so that the production cost per piece unit is insignificant; consequently, there is no alternative but to reduce costs of materials or proportions thereof. But, guides 81, 82 are wholly formed of stainless steel of high quality (at high cost), thereby making it difficult to reduce costs and proportions of materials. Reduction of cost of material has been tried by thinning the whole plate thickness of guides 81, 82, even though the inner and outer diameters of guides 81, 82 have been standardised relative to cassette C; but, it was difficult to moderate the plate thickness. In general, every manufacturer of tape guides has had fierce competition, but any significant reduction in cost has not been achieved, although price cutting is inevitably required to enable a manufacturer to be victorious in international competition.

It has now been found in accordance with the present invention that a tape guide can be provided at a considerably reduced price. The tape guide preserves e.g. the same high precision and anti-corrosive and wear resistant properties as the known tape guides, but provides less frictional resistance against tape.

The present invention provides a tape guide, e.g. for a tape cassette for VTR,
comprising:
a cylindrical tape guide body of first material(s); and
a covering member that is a sheet member or tape contact sheet member, the covering member sufficiently covering circumferential surface of the tape guide body, the covering being optionally at least in a range larger than the surface for contacting the tape, the covering member comprising at least one second material so that the tape guide is a composite tape guide, the at least one second material comprising at least one non-magnetic material, characterised by:
the tape guide body has a partially stepped portion for a thickness of the covering member, the longitudinally opposite ends of the tape guide body having engaging slits, e.g. four said slits, of predetermined length in the vicinity of the boundary of the stepped portion; and
the covering member when expanded against elasticity thereof has a circular arc of curvature sufficiently larger than the tape guide body in the circumferential direction, the covering member having at its arcuate opposite ends inwardly directed engaging rims corresponding to the slits, so that the covering member may be expanded against elasticity thereof and be mounted on the stepped portion of the tape guide body such that the rims engage the slits.

The tape guide body may be made of inexpensive and conveniently workable material(s), e.g. plastics material(s). The materials for making the covering member can provide improved wear resistance and anti-corrosive properties, and less frictional resistance against tape. Some examples of such materials are: a stainless steel, a manganese steel, a ceramics material, or a substrate (e.g. a brass plate) plated with a non-magnetic hard metal (e.g. chromium).

It will be appreciated that circumferential surface of the tape guide body (at least in a range or expanse larger than surface contacting the tape) may be covered with a covering member so as to give a composite of at least two different materials, thereby enabling improved wear resistance and anti-corrosive properties, and ensuring the same high precision as the known tape guides. Furthermore, only the tape guide portion in frictional contact with tape may be formed as a non-magnetic surface of improved wear resistance and anti-corrosive properties but of less frictional resistance against tape. The tape guide may be used without rotation thereof when in contact with tape.

The invention will now be described by way of example with reference to the accompanying drawings:

Figures 1A, 1B are perspective views of conventional tape guides.

Figure 2 is a schematic plan view for showing a general use state of a tape guide.

Figure 3 is a perspective view of a first embodiment of a tape guide according to the invention;

Figure 4 is a disassembled perspective view of the tape guide of Fig. 3.

Figure 5 is a plan view of the tape guide of Fig. 3.

In the drawings, general reference 1 represents composite tape guides.

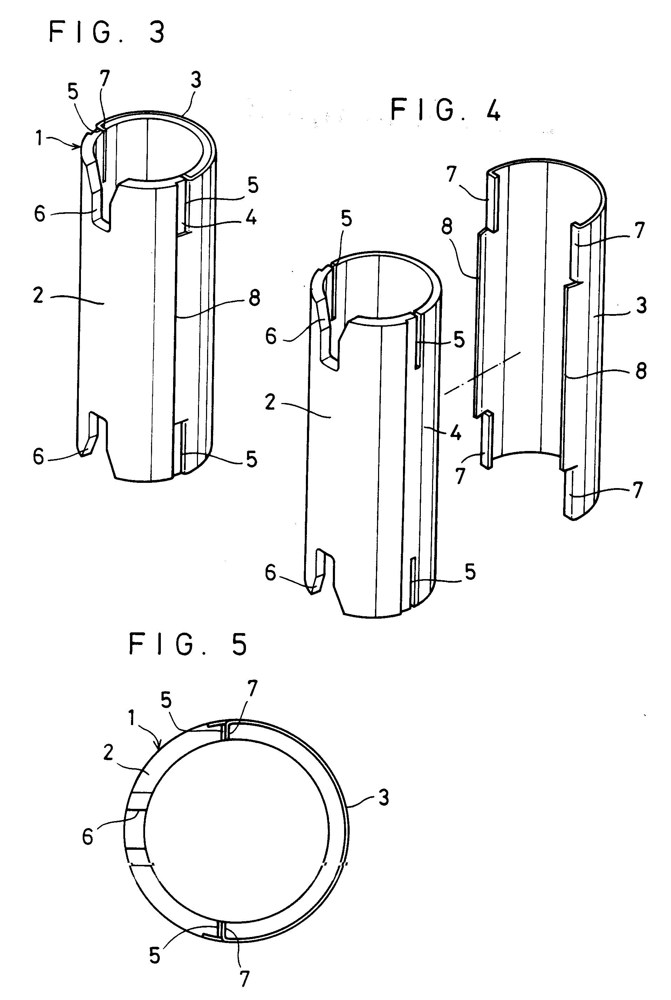

In Figs. 3 to 5, a composite tape guide 1 comprises: a cylindrical tape guide body 2; and a tape contact sheet member 3 of circumferential surface adapted to cover a range or expanse larger than surface contacting tape for VTR. Body 2 is a cylinder of predetermined inner and outer diameters. Body 2 has in its outer circumference a covering portion 4 stepped for a thickness of tape contact member 3 only at surface contacting tape contact member 3. In the vicinity of the boundary of the stepped covering portion 4, tape guide body 2 at its longitudinal opposite ends has four engaging slits 5 each of predetermined length. A portion of body 2 other than covering portion 4 has at its longitudinal opposite ends V-shaped locating recesses 6 respectively for preventing rotation of composite tape guide 1 when mounted in a cassette case C (Fig. 2). Tape contact member 3 is a sheet member made of non-magnetic material of improved wear resistant and anti-corrosive properties, e.g. a stainless steel. Member 3 has a circular arc of curvature somewhat larger than a semi-circle, e.g. substantially 200 degrees in the circumferential direction of tape guide body 2. The curvature of member 3 is somewhat smaller than that of the covering portion 4 of tape guide body 2, so that no clearance is formed between the covering portion 4 and tape contact member 3. Member 3 is bent inwardly at the edges of the arcuate opposite ends 8, 8 to form engaging rims 7. Thus, covering tape guide body 2 with tape contact member 3 is carried out by slightly expanding the tape contact member 3 against the elasticity thereof, so as to allow mounting to the covering portion 4 and engagement of rims 7 with engaging slits 5. One example of tape guide 1 is such that tape guide body 2 has 4.8 mm inner diameter and 6.0 mm outer diameter; covering portion 4 has 0.15 mm less thickness radius; and tape contact member 3 is 0.15 mm in thickness. Such a tape contact member 3 may conveniently be expanded and restored to its original size because of its thinness of 0.15 mm.

Tape guide body 2 occupies a predominant portion of tape guide 1. Tape guide body 2 may be made of conveniently processable material(s), e.g.

plastics material(s). Only an essential portion for contacting tape is covered by material(s) (e.g. a stainless steel) having non-magnetic, wear resistant, and anti-corrosive properties with less frictional resistance against tape. Thus, tape guide body 2 would never be inferior in function but be sharply reduced in cost compared with conventional tape guides 81 and 82 (Fig. 1, 2).

Tape contact member 3 may be made of manganese steel or ceramic materials to provide a composite tape guide 1 of more improved wear-resistant and anti-corrosive properties than one made of stainless steel. The surface of conveniently processable materials (e.g. brass) may be plated with non-magnetic materials of improved wear-resistant and anti-corrosive properties, but less frictional resistance against tape (e.g. hard metals for instance chromium) to shorten an operation time with other advantages.

Composite tape guides 1 according to the above embodiments may be mounted and fastened for use to cassette case C (Fig. 2). A composite tape guide 1 is adapted not to rotate within cassette case C, but is guided only through frictional contact with tape T. Even when tape T is pulled out to the position of play-back head H (Fig. 2) or even when tape T is stored within cassette case C, an angle for which the contact portion of tape T holds in relation to the composite tape guide 1 never exceeds 180 degrees, and an angular proportion of the portion where tape guide body 2 is covered by tape contact member 3 is sufficient for more than a semi-circular surface.

It will be appreciated that cylindrical tape guide body 2 may be formed of inexpensive materials, e.g. plastics materials. The circumferential surface of tape guide body 2 (at least in a range or expanse larger than the surface contacting with tape T for VTR) may be covered with a sheet member of non-magnetic materials(s) (e.g. a stainless steel) of improved wear-resistant and anti-corrosive properties, but of less frictional resistance against the tape, to form a composite layer of two different materials, thereby resulting in production at a considerably reduced cost owing to use of inexpensive materials for the greater portion of cylindrical tape guide by 2 as compared with the conventional tape guides 81 and 82 formed completely of stainless steel. The tape guides 1 do not rotate but remain in frictional contact with the tape T in operation.

On the basis that only a portion of material remaining in frictional contact with tape may be prepared with non-magnetic materials of improved wear-resistant and anti-corrosive properties, the circumferential surface of tape guide body 2 (at least in a range or expanse larger than the surface contacting with tape for VTR) may be covered with a sheet of non-magnetic material(s) (e.g. a stainless steel) of improved wear-resistant and anti-corrosive properties, to form a composite layer of two different materials, so that an arrangement of tape guide 1 to connect tape T with the sheet may ensure a high precision like the conventional tape guides 81, 82 and a sufficient strength by covering the tape guide body 2 with the sheet. Expensive materials (e.g. a stainless steel) are used slightly as a sheet to reduce substantially the cost of material compared with the conventional tape guides 81, 82. A simple manufacturing process of covering tape guide body 2 with a sheet may achieve a considerable reduction of the manufacturing cost.

## Claims

1. A tape guide, e.g. for a tape cassette for VTR, comprising:
   a cylindrical tape guide body (2) of first material(s); and
   a covering member (3) that is a sheet member or tape contact sheet member, the covering member sufficiently covering circumferential surface of the tape guide body, the covering being optionally at least in a range larger than the surface for contacting the tape, the covering member comprising at least one second material so that the tape guide is a composite tape guide, the at least one second material comprising at least one non-magnetic material, characterised by:
   the tape guide body (2) has a partially stepped portion (4) for a thickness of the covering member (3), the longitudinally opposite ends of the tape guide body having engaging slits (5), e.g. four said slits, of predetermined length in the vicinity of the boundary of the stepped portion; and
   the covering member (3) when expanded against elasticity thereof has a circular arc of curvature sufficiently larger than the tape guide body in the circumferential direction, the covering member having at its arcuate opposite ends inwardly directed engaging rims (7) corresponding to the slits, so that the covering member may be expanded against elasticity thereof and be mounted on the stepped portion of the tape guide body such that the rims engage the slits.

2. A tape guide according to claim 1, characterised by the tape guide body (2) comprises a plastics material.

3. A tape guide according to claim 1 or 2, characterised by the covering member comprises a stainless steel.

4. A tape guide according to claim 1 or 2, characterised by the covering member comprises a manganese steel.

5. A tape guide according to claim 1 or 2, characterised by the covering member comprises a ceramic material.

6. A tape guide according to claim 1 or 2, characterised by the covering member comprises a substrate plated with a non-magnetic hard metal.

7. A tape guide according to claim 6, characterised by the substrate comprises brass; and the non-magnetic hard metal comprises chromium.

## Revendications

1. Guide-bande, par exemple pour une cassette à bande pour un magnétoscope, comprenant :
   un corps cylindrique de guide-bande (2) formé par un ou des premiers matériaux; et
   un élément de revêtement (3) qui est un élément en forme de feuille ou un élément en forme de feuille établissant un contact avec la bande, l'élément de revêtement recouvrant suffisamment la surface circonférentielle du corps du guide-bande et le recouvrement s'effectuant facultativement au moins dans une zone plus large que la surface destinée à être en contact avec la bande, l'élément de revêtement comprenant au moins un second matériau de sorte que le guide-bande est un guide-bande composite, le au moins un second matériau contenant au moins un matériau amagnétique, caractérisé en ce que :
   le corps (2) du guide-bande possède une partie partiellement étagée (4) servant à loger une épaisseur de l'élément de revêtement (3), les extrémités longitudinalement opposées du corps du guide-bande comportant des fentes d'engrènement (5), par exemple quatre fentes, possédant une longueur prédéterminée, au voisinage de la limite de la partie étagée; et
   l'élément de revêtement (3) possède lorsqu'on l'étend à l'encontre de son élasticité, une forme courbe en arc de cercle suffisamment plus étendue que celle du corps du guide-bande dans la direction circonférentielle, l'élément de revêtement possédant, au niveau de ses extrémités cintrées opposées, des bords repliés (7), qui s'engagent directement vers l'intérieur et correspondent aux fentes, de sorte que l'élément de revêtement peut être étendu en raison de son élasticité et monté sur la partie étagée du corps du guide-bande de manière que les bords repliés s'engagent dans les fentes.

2. Guide-bande selon la revendication 1, caractérisé en ce que le corps (2) du guide-bande contient une matière plastique.

3. Guide-bande selon la revendication 1 ou 2, caractérisé en ce que l'élément de revêtement contient de l'acier inoxydable.

4. Guide-bande selon la revendication 1 ou 2, caractérisé en ce que l'élément de revêtement contient un acier au manganèse.

5. Guide-bande selon la revendication 1 ou 2, caractérisé en ce que l'élément de revêtement contient un matériau céramique.

6. Guide-bande selon la revendication 1 ou 2, caractérisé en ce que l'élément de revêtement contient un substrat doublé d'un métal dur amagnétique.

7. Guide-bande selon la revendication 6, caractérisé en ce que le substrat contient du laiton; et que le métal dur amagnétique contient du chrome.

**Patentansprüche**

1. Bandführung, beispielsweise für eine Bandkassette für einen Videorekorder, die aufweist:
einen zylindrischen Bandführungskörper (2) aus einem ersten Material; und
ein Abdeckglied (3), das ein Blatteil oder Bandanlage-Blatteil ist, wobei das Abdeckglied in ausreichender Weise die Umfangsoberfläche des Bandführungskörpers abdeckt, die Abdeckung wahlweise mindestens in einem Bereich größer als die Oberfläche für die Anlage des Bandes ist, das Abdeckglied mindestens ein zweites Material derart aufweist, so daß die Bandführung eine zusammengesetzte Bandführung ist und das mindestens eine zweite Material mindestens ein nichtmagnetisches Material aufweist,
dadurch gekennzeichnet,
daß der Bandführungskörper (2), wenn er elastisch ausgedehnt wird, einen teilweise gestuften Bereich (4) für eine Dicke des Abdeckgliedes (3) aufweist, die in Längsrichtung einander gegenüberliegenden Enden des Bandführungskörpers Eingriffsschlitze (5), beispielsweise 4 Schlitze, von vorgegebener Länge in der Nachbarschaft der Grenze des gestuften Bereichs aufweisen; und

daß das Abdeckglied (3) eine kreisbogenförmige Krümmung aufweist, die in ausreichendem Maße größer als der Bandführungskörper in Umfangsrichtung ist, wobei an den bogenförmigen einander gegenüberliegenden Enden des Abdeckglieds einwärts gewandte Eingriffsvorsprünge (7) entsprechend den Schlitzen derart vorgesehen sind, daß das Abdeckglied elastisch ausdehnbar ist und an dem gestuften Bereich des Bandführungskörpers derart lagerbar ist, daß die Vorsprünge in die Schlitze eingreifen.

2. Bandführung nach Anspruch 1, dadurch gekennzeichnet, daß der Bandführungskörper (2) ein Kunststoffmaterial aufweist.

3. Bandführung nach Anspruch 1 oder 2, dadurch gekennzeichnet, daß das Abdeckglied einen rostfreien Stahl aufweist.

4. Bandfuhrung nach Anspruch 1 oder 2, dadurch gekennzeichnet, daß das Abdeckglied Manganstahl aufweist.

5. Bandführung nach Anspruch 1 oder 2, dadurch gekennzeichnet, daß das Abdeckglied ein keramisches Material aufweist.

6. Bandführung nach Anspruch 1 oder 2, dadurch gekennzeicnet, daß das Abdeckglied ein Substrat aufweist, das mit einem nichtmagnetischen Hartmetall beschichtet ist.

7. Bandführung nach Anspruch 6, dadurch gekennzeichnet, daß das Substrat Messing aufweist; und daß das nichtmagnetische Hartmetall Chrom aufweist.

# F I G . 1

(A)                    (B)

# F I G . 2

FIG. 3

FIG. 4

FIG. 5